# EUROPÄISCHE PATENTSCHRIFT

(11) **EP 2 206 227 B1**
(45) Veröffentlichungstag und Bekanntmachung des Hinweises auf die Patenterteilung: **28.11.2012**
(21) Anmeldenummer: 08801630.8
(22) Anmeldetag: 20.08.2008
(51) Int. Cl.: H02K 21/14, H02K 11/00

(54) **ELEKTROMOTOR**
ELECTRIC MOTOR
MOTEUR ÉLECTRIQUE

(30) Priorität: 24.10.2007 DE 102007051105
(43) Veröffentlichungstag der Anmeldung: 14.07.2010
(73) Patentinhaber: SEW-EURODRIVE GmbH & Co. KG, 76646 Bruchsal (DE)
(72) Erfinder: EPSKAMP, Torsten, 75015 Bretten (DE)
(86) Internationale Anmeldenummer: PCT/EP2008/006847
(87) Internationale Veröffentlichungsnummer: WO 2009/052887

(56) Entgegenhaltungen:
- EP-A- 0 549 426
- EP-A- 0 664 600
- EP-A- 1 511 157
- WO-A-92/22121
- JP-A- 61 042 257

## Beschreibung

Die Erfindung betrifft einen Elektromotor.

Es ist bekannt, dass Synchronmotoren einen auf dem Rotor vorgesehenen Permanentmagnetbereich aufweisen, der in Zusammenwirkung mit dem Statorfeld zur Drehmomenterzeugung vorgesehen ist.

Es ist auch bekannt, an einer Rotorwelle Inkremantalgeber zur Winkelerfassung der Rotorstellung anzubringen.

**Aus der** JP 61 042257 A **ist bekannt, einen Sensor in demjenigen axialen Bereich zu positionieren, der von der Statorwicklung samt Umlenkungsbereich (dortige Figur 8**, **dortiges Bezugszeichen 4), also Wicklungskopfbereich, der Wicklung überdeckt wird. Der Sensor ist auf gleichem Radialabstand wie die am dortigen Rotor verbundenen Permanentmagnete angeordnet und steht diesen axial gegenüber.**

Der Erfindung liegt daher die Aufgabe zugrunde, einen Synchronmotor einfach und kostengünstig herstellbar weiterzubilden.

Erfindungsgemäß wird die Aufgabe bei dem Elektromotor nach den in Anspruch 1 angegebenen Merkmalen gelöst.

Von Vorteil ist dabei, dass eine kompakte integrierte Winkelerfassung ermöglicht ist, die außerhalb des Luftspaltes aber innerhalb des Elektromotors vorsehbar ist. Die Störanfälligkeit ist gering, da die vom Permanentmagnetbereich erzeugten Magnetfelder sehr stark ausgeprägt sind. Denn die Auslegung dieses Bereiches erfolgt unter dem Ziel, das Drehmoment des Elektromotors zu erzeugen. Genau diese so ausgelegten im Permanentmagnetbereich befindlichen Permanentmagnetteile werden nun axial verlängert ausgeführt. Auf diese Weise ist diese Verlängerung für den Sensor ein Geber mit sehr starkem Magnetfeld. Daher ist das Sensorsignal im Wesentlichen frei von Störungen. Auch die Statorwicklungen sind weit entfernt, da die Verlängerung herausgeführt ist.

Bei einer vorteilhaften Ausgestaltung umfasst die Sensoreinrichtung einen oder mehrere Sensoren. Von Vorteil ist dabei, dass eine höhere Auflösung und ein besseres Signal-Rauschverhältnis erzielbar ist.

Insbesondere ist die Sensoreinrichtung mit einer Auswerteeinheit verbunden, welche aus den Sensorsignalen versorgbar ist. Vorteiligerweise sind auch Sensoren verwendbar, die eine drehgeschwindigkeitsabhängige Induktionsspannung als Versorgungsspannung nutzen und für die Auswerteeinheit zur Verfügung stellen. Da die Magnetfeldstärke so hoch ist, ist eine Versorgung auch bis zu langsamen Drehzahlen gewährleistete.

Bei einer vorteilhaften Ausgestaltung ist als Sensor ein Wiegandsensor verwendet. Von Vorteil ist dabei, dass die Auswerteeinheit aus der Energie der Sensorsignale selbst versorgbar ist und dies auch bei langsamen Drehzahlen ausführbar ist. Denn das Umklappen der Impulsdrahtsensoren, insbesondere Wiegandsensoren, erfolgt abrupt und führt auch bei langsamsten Drehgeschwindigkeiten mit Fast-Stillstand zu starken Signalströmen.

Bei einer vorteilhaften Ausgestaltung ist die Sensoreinrichtung zusammen mit der Auswerteeinheit zur Erfassung der Winkellage des Rotors vorgesehen. Von Vorteil ist dabei, dass die Auswerteeinheit integriert ausführbar ist.

**Erfindungsgemäß** ist der Permanentmagnetbereich aus Einzelmagneten zusammengesetzt, insbesondere die sich axial über den gesamten Permanentmagnetbereich erstrecken. Von Vorteil ist dabei, dass sehr starke kostengünstige Magnetteile verwendbar sind.

Bei einer vorteilhaften Ausgestaltung ist der Permanentmagnetbereich aus einem oder mehreren Polringen zusammengesetzt, insbesondere die sich insgesamt axial über den gesamten Permanentmagnetbereich erstrecken. Von Vorteil ist dabei, dass eine Aufmagnetisierung der Polringe erst nach dem Aufstecken auf den Rotor ausführbar ist und somit das Aufstecken ohne besonderen Kraftaufwand ermöglicht ist.

Bei einer vorteilhaften Ausgestaltung sind die Permanentmagnetteile des Permanentmagnetbereichs auf einem Blechpaket des Rotors verbunden, insbesondere stoffschlüssig, wie klebend oder dergleichen, und/oder formschlüssig, wie mittels Passfederverbindung oder dergleichen. Von Vorteil ist dabei, dass kostengünstige sichere Verbindungen ermöglicht sind.

Bei einer vorteilhaften Ausgestaltung erstreckt das Blechpaket des Rotors sich nur über den axialen Bereich des Statorblechpakets oder der Statorwicklungen. Von Vorteil ist dabei, dass der Motor ein geringes Trägheitsmoment aufweist. Die Verlängerung muss keine wesentlichen Anteile an Drehmoment übertragen und somit ist eine Abstützung einsparbar.

**Bei einer Verwendung** eines auf dem Rotor eines Elektromotors vorgesehenen Permanentmagnetbereichs, der mit dem vom Stator des Elektromotors erzeugten Feld zur Drehmomenterzeugung zusammenwirkt, ist der Permanentmagnetbereich als Geber für eine Sensoreinrichtung vorgesehen.

Von Vorteil ist dabei, dass der eigentlich zur Drehmomenterzeugung verwendete Bereich auch zur Winkelerfassung verwendbar ist. Im Vergleich zu einem Anbau-Winkelsensor ist somit ein geringeres Trägheitsmoment beibehaltbar und trotzdem eine Winkelerfassung ausführbar.

Der Permanentmagnetbereich ist axial an zumindest einem axialen Endbereich weiter ausgedehnt als derjenige Bereich, über welchen sich das Blechpaket des Stators und über welchen sich die Statorwicklung des Stators erstreckt,

wobei am axialen Ende die Sensoreinrichtung angeordnet ist. Von Vorteil ist dabei, dass eine geringfügige konstruktive Änderung ausreicht. Insbesondere muss kein zusätzlicher Winkelsensor an den Motor angebaut werden, sondern ein sowieso vorhandener Bereich wird nur etwas verlängert ausgeführt. Somit sind auch die mechanischen Änderungen gering, welche notwendig sind, um die Erfindung zu realisieren.

Weitere Vorteile ergeben sich aus den Unteransprüchen.

### Bezugszeichenliste

- 1: Sensor
- 2: Blechpaket
- 3: Statorwicklung
- 4: Permanentmagnetbereich
- 5: Blechpaket
- 6: Rotorwelle
- 7: Verlängerungsbereich

Die Erfindung wird nun anhand von Abbildungen näher erläutert:

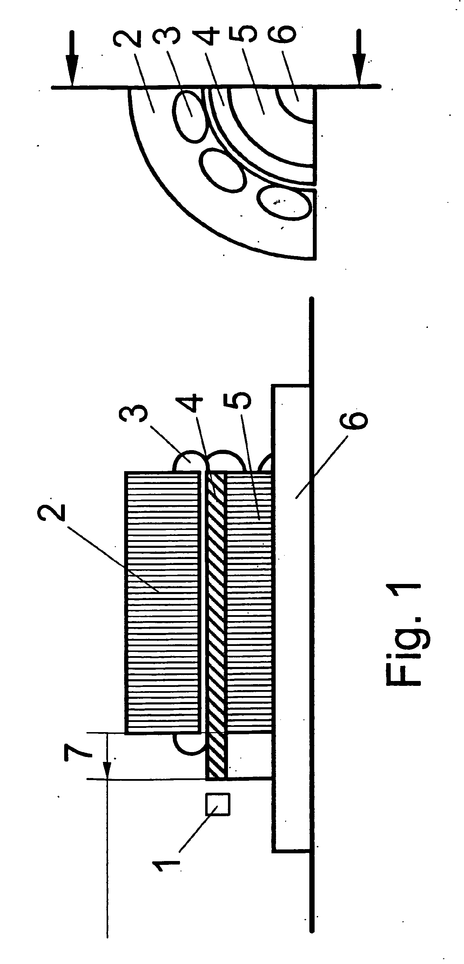

In der Figur 1 ist ein erfindungsgemäßer Elektromotor in aufgeschnittener Weise von der Seite und in Draufsicht gezeigt.

Der Elektromotor ist als Synchronmotor ausgeführt, wobei der Rotor Permanentmagnetelemente umfasst, die im Wesentlichen radial magnetisiert sind und derart ausgeführt sind, dass in Umfangsrichtung eine Abfolge von magnetischen Nord- und Süd-Polen vorgesehen ist.

Die Statorwicklung 3 ist um Zähne des Blechpakets 2 vorgesehen und erzeugt ein Statorfeld. Der Stator ist mit dem Sensor 1 verbunden.

Die Rotorwelle 6 trägt ein Blechpaket 5, auf dem ein Permanentmagnetbereich 4 vorgesehen ist.

Dieser Permanentmagnetbereich 4 umfasst Einzelmagnete die abwechselnd in Umfangsrichtung vorgesehen sind. Alternativ sind aber auch Ringe auf die Rotorwelle aufsteckbar, die entsprechend in Umfangsrichtung abwechselnd magnetisiert sind.

Das Blechpaket 2 des Stators erstreckt sich über einen ersten axialen Bereich. Die Wicklungen 3 des Stators erstrecken sich über einen etwas größeren axialen Bereich, der den ersten Bereich umfasst.

Der Permanentmagnetbereich erstreckt sich über einen dritten axialen Bereich, der an einem axialen Endbereich des Motors axial weiter ausgedehnt ist als der erste und auch der zweite Bereich. Dieses Überragen des ersten Bereiches wird im Folgenden auch als Verlängerungsbereich 7 bezeichnet. Bei weiteren erfindungsgemäßen Ausführungsbeispielen ist der Verlängerungsbereich in jedem Fall aber derart gewählt, dass die von dem Permanentmagneten stammende Feldstärke betragsmäßig die Feldstärke der Statorwicklung übertrifft. In Abänderung zur Figur 1 ist also der Sensor 1 vorteiligerweise etwas radial weiter innen positioniert und axial etwas näher am Blechpaket des Rotors. Der dritte Bereich muss den zweiten Bereich daher nicht notwendigerweise überragen.

Bei der Erfindung nach Figur 1 sind also diejenigen Permanentmagnetteile, welche zur Drehmomenterzeugung verwendet werden axial länger vorgesehen als sich der axiale Bereich der Statorwicklung und des Statorblechpakets erstreckt.

Am axialen Ende des Verlängerungsbereiches 7 ist der Sensor vorgesehen, der somit ein von der Statorwicklung nur gering gestörtes Magnetfeld detektiert. Das Magnetfeld ist in diesem Bereich im Wesentlichen von den Permanentmagnetteilen erzeugt. Da in Umfangsrichtung die Magnetisierungsrichtung des Permanentmagnetmaterials eine wechselnde Abfolge darstellt, ist vom Sensor eine Drehbewegung und Veränderung der Winkelstellung fehlerarm und störsicher erkennbar.

Der Sensor 1 ist auch aus mehreren in Umfangsrichtung hintereinander angeordneten Sensoren zusammen vorsehbar. Somit ist die mit den Sensoren verbundene Auswerteeinheit in der Lage, aus den Sensorsignalen sogar eine hohe Winkelauflösung zu erreichen.

Der Sensor 1 ist ortsfest mit dem Stator verbunden.

Vorzugweise ist der Sensor 1 derart ausgeführt, dass die Sensorsignale selbst auch bei langsamer Drehung der Rotorwelle zur Energieversorgung der Auswerteeinheit verwendbar sind. Besonders geeignet sind hierzu Wiegandsensoren. Auf diese Weise ist auch bei Stromausfall der Versorgung für die Auswerteeinheit ein Detektieren der Winkelveränderung beziehungsweise der zurückgelegten Umdrehungen ermöglicht.

Da der Sensor oder die Sensoren sehr nahe an den Permanentmagneten angeordnet sind und diese auch der Drehmomenterzeugung entsprechend stark ausgelegt sind, sind Sensoren derart ausführbar, dass den Sensorsignalen hohe elektrische Leistungen entnehmbar sind. Somit sind sogar weitere Einheiten über die Auswerteeinheit hinaus versorgbar, beispielsweise eine mit der Auswerteeinheit verbundene oder in ihr integrierte Busschnittstelle zum Übermitteln der von der Auswerteeinheit bestimmten Winkelwerte oder Umdrehungszahlen an andere mit der Busschnittstelle verbundenen Busteilnehmer.

Je länger der Verlängerungsbereich 7 ausgeführt wird, desto geringer sind im Bereich der Sensoren diejenigen Störfelder, welche von der Statorwicklung erzeugt sind.

Stator und Rotor des Motors sind koaxial angeordnet.

Bei weiteren Beispielen ist statt der um die Zähne des Blechpakets vorgesehenen Statorwicklung 3 eine jeweilige Luftspulenwicklung vorgesehen.

## Patentansprüche

1. Elektromotor, umfassend zumindest einen Rotor und einen Stator,
umfassend einen auf seinem Rotor vorgesehenen Permanentmagnetbereich (4), der mit dem vom Stator des Elektromotors erzeugten Feld zur Drehmomenterzeugung zusammenwirkt,
wobei die Magnetisierungsrichtung des Permanentmagnetmaterials in Umfangsrichtung eine wechselnde Abfolge darstellt, indem die Permanentmagnetelemente des Permanentmagnetmaterials im Wesentlichen radial magnetisiert sind und derart ausgeführt sind, dass in Umfangsrichtung eine Abfolge von magnetischen Nord- und Süd-Polen vorgesehen ist,
**dadurch gekennzeichnet, dass**
der Permanentmagnetbereich (4) axial an zumindest einem axialen Endbereich weiter ausgedehnt ist als derjenige Bereich,
- über welchen sich das Blechpaket (2) des Stators
- und über welchen sich die Statorwicklung (3) des Stators erstreckt,
wobei am axialen Ende eine Sensoreinrichtung (1) die ein Magnetfeld detektiert, derart angeordnet ist,
dass der Sensor (1) radial weiter innen als der Permanentmagnetbereich (4) angeordnet ist,
wobei der Sensor (1) in oder an einem Lagerschild des Motors angeordnet ist, so dass der Sensor (1) ortsfest verbunden ist mit dem Stator des Motors.

2. Verwendung nach Anspruch 1,
**dadurch gekennzeichnet, dass**
die Sensoreinrichtung einen oder mehrere Sensoren (1) umfasst.

3. Elektromotor nach mindestens einem der vorangegangenen Ansprüche,
**dadurch gekennzeichnet, dass**
der Sensor (1) axial beabstandet ist vom Blechpaket'des Rotors.

4. Elektromotor nach mindestens einem der vorangegangenen Ansprüche,
**dadurch gekennieichnet, dass**
zwischen Statorwicklung (3), und Sensor (1) eine magnetische Abschirmung, insbesondere aus Aluminium, angeordnet ist.

5. Elektromotor nach mindestens einem der vorangegangenen Ansprüche,
**dadurch gekennzeichnet, dass**
als Sensor (1) ein Wiegandsensor verwendet ist.

6. Elektromotor nach mindestens einem der vorangegangenen Ansprüche,
**dadurch gekennzeichnet, dass**
die Sensoreinrichtung (1) mit einer Auswerteeinheit verbunden ist, welche aus den Sensorsignalen versorgbar ist.

7. Elektromotor nach mindestens einem der vorangegangenen Ansprüche,
**dadurch gekennzeichnet, dass**
die Sensoreinrichtung (1) zusammen mit der Auswerteeinheit zur Erfassung der Winkellage des Rotors vorgesehen ist.

8. Elektromotor nach mindestens einem der vorangegangenen Ansprüche,
**dadurch gekennzeichnet, dass**
der Permanentmagnetbereich (4) aus Einzelmagneten zusammengesetzt ist, insbesondere die sich axial über den gesamten Permanentmagnetbereich erstrecken.

9. Elektromotor nach mindestens einem der vorangegangenen Ansprüche,
**dadurch gekennzeichnet, dass**
der Permanentmagnetbereich (4) aus einem oder mehreren Polringen zusammengesetzt ist, insbesondere die sich insgesamt axial über den gesamten Permanentmagnetbereich erstrecken.

10. Elektromotor nach mindestens einem der vorangegangenen Ansprüche,
**dadurch gekennzeichnet, dass**
die Permanentmagnetteile des Permanentmagnetbereichs (4) auf einem Blechpaket (5) des Rotors verbunden sind, insbesondere stoffschlüssig, wie klebend oder dergleichen, und/oder formschlüssig, wie mittels Passfederverbindung oder dergleichen.

11. Elektromotor nach mindestens einem der vorangegangenen Ansprüche,
**dadurch gekennzeichnet, dass**
das Blechpaket (5) des Rotors sich nur über den axialen Bereich des Statorblechpakets (2) oder der Statorwicklungen (3) erstreckt.

12. Elektromotor nach mindestens einem der vorangegangenen Ansprüche,
**dadurch gekennzeichnet, dass**
der Motor ein Synchronmotor st.

13. Elektromotor nach mindestens einem der vorangegangenen Ansprüche,
**dadurch gekennzeichnet, dass**
der Sensor (1) mit Mitteln zur Bestimmung der Rotorlage elektrisch verbunden ist.

## Claims

1. Electric motor, comprising at least a rotor and a stator,
comprising a permanent-magnet region (4) which is provided on the rotor of the electric motor and interacts with the field generated by the stator of the electric motor in order to generate torque,
the magnetising direction of the permanent-magnet material in the circumferential direction constituting an alternating sequence in that the permanent-magnet elements of the permanent-magnet material are substantially radially magnetised and are designed in such a manner that in the circumferential direction a sequence of magnetic north and south poles is provided,
**characterised in that**
the permanent-magnet region (4) is axially extended, at least at one axial end region, further than that region
- over which the laminated core (2) of the stator extends
- and over which the stator winding (3) of the stator extends,
a sensor device (1) which detects a magnetic field being arranged at the axial end in such a manner
that the sensor (1) is arranged radially further inwards than the permanent-magnet region (4),
the sensor (1) being arranged in or on an end shield of the motor, so that the sensor (1) is stationarily connected to the stator of the motor.

2. Use [sic] according to Claim 1,
**characterised in that**
the sensor device comprises one or more sensors (1).

3. Electric motor according to at least one of the preceding claims,
**characterised in that**
the sensor (1) is axially spaced from the laminated core (5) of the rotor.

4. Electric motor according to at least one of the preceding claims,
**characterised in that**
a magnetic screen, in particular made of aluminium, is arranged between the stator winding (3) and the sensor (1).

5. Electric motor according to at least one of the preceding claims,
**characterised in that**
a Wiegand sensor is used as the sensor (1).

6. Electric motor according to at least one of the preceding claims,
**characterised in that**
the sensor device (1) is connected to an evaluating unit which can be supplied from the sensor signals.

7. Electric motor according to at least one of the preceding claims,
**characterised in that**
the sensor device (1) together with the evaluating unit is provided for detecting the angular position of the rotor.

8. Electric motor according to at least one of the preceding claims,
**characterised in that**
the permanent-magnet region (4) is composed of individual magnets, in particular which extend axially over the entire permanent-magnet region.

9. Electric motor according to at least one of the preceding claims,
**characterised in that**
the permanent-magnet region (4) is composed of one or more pole rings, in particular which extend as a whole axially over the entire permanent-magnet region.

10. Electric motor according to at least one of the preceding claims,
**characterised in that**
the permanent-magnet parts of the permanent-magnet region (4) are connected on a laminated core (5) of the rotor, in particular in a materially joined manner, such as by adhesive bonding or the like, and/or in a form-fitting manner, such as by means of a feather key connection or the like.

11. Electric motor according to at least one of the preceding claims,
**characterised in that**
the laminated core (5) of the rotor extends only over the axial region of the stator laminated core (2) or of the stator windings (3).

12. Electric motor according to at least one of the preceding claims,
**characterised in that**
the motor is a synchronous motor.

13. Electric motor according to at least one of the preceding claims,
**characterised in that**
the sensor (1) is electrically connected to means for determining the rotor position.

## Revendications

1. Moteur électrique, comprenant au moins un rotor et un stator, comprenant une région d'aimant permanent (4), qui est prévue sur son rotor et qui coopère avec le champ généré par le stator du moteur électrique pour produire un couple de rotation,
sachant que la direction de magnétisation du matériau d'aimant permanent constitue en direction circonférentielle une succession alternée par le fait que les éléments d'aimant permanent du matériau d'aimant permanent sont magnétisés essentiellement radialement et sont réalisés de telle sorte qu'une succession de pôles magnétiques nord et de pôles magnétiques sud est prévue en direction circonférentielle,
**caractérisé en ce que** la région d'aimant permanent (4), au moins dans une région terminale axiale, s'étend axialement plus loin que la région
- sur laquelle s'étend l'empilage de tôles (2) du stator
- et sur laquelle s'étend le bobinage (3) du stator,
sachant qu'un équipement de détection (1), qui détecte un champ magnétique, est disposé à l'extrémité axiale de telle sorte que le capteur (1) est disposé radialement plus à l'intérieur que la région d'aimant permanent (4),
sachant que le capteur (1) est disposé dans ou sur un flasque du moteur, de sorte que le capteur (1) est relié à pose fixe au stator du moteur.

2. Moteur électrique selon la revendication 1, **caractérisé en ce que** l'équipement de détection comprend un ou plusieurs capteurs (1).

3. Moteur électrique selon au moins une des revendications précédentes, **caractérisé en ce que** le capteur (1) est axialement distant de l'empilage de tôles (5) du rotor.

4. Moteur électrique selon au moins une des revendications précédentes, **caractérisé en ce qu'**un blindage magnétique; notamment en aluminium, est disposé entre le bobinage de stator (3) et le capteur (1).

5. Moteur électrique selon au moins une des revendications précédentes, **caractérisé en ce qu'**un capteur Wiegand est utilisé comme capteur (1).

6. Moteur électrique selon au moins une des revendications précédentes, **caractérisé en ce que** l'équipement de détection (1) est relié à une unité d'interprétation qui peut être alimentée à partir des signaux du capteur.

7. Moteur électrique selon au moins une des revendications précédentes, **caractérisé en ce que** l'équipement de détection (1) est prévu conjointement avec l'unité d'interprétation pour enregistrer la position angulaire du rotor.

8. Moteur électrique selon au moins une des revendications précédentes, **caractérisé en ce que** la région d'aimant permanent (4) est composée d'aimants individuels, en particulier qui s'étendent axialement sur toute la région d'aimant permanent.

9. Moteur électrique selon au moins une des revendications précédentes, **caractérisé en ce que** la région d'aimant permanent (4) est composée d'une ou plusieurs bagues polaires, en particulier qui s'étendent globalement axialement sur toute la région d'aimant permanent.

10. Moteur électrique selon au moins une des revendications précédentes, **caractérisé en ce que** les éléments d'aimant permanent de la région d'aimant permanent (4) sont reliés sur un empilage de tôles (5) du rotor, en particulier par liaison de matière, comme par collage ou analogue, et/ou par engagement positif, comme au moyen d'un assemblage par clavette parallèle ou analogue.

11. Moteur électrique selon au moins une des revendications précédentes, **caractérisé en ce que** l'empilage de tôles (5) du rotor ne s'étend que sur la région axiale de l'empilage de tôles de stator (2) ou des bobinages de stator (3).

12. Moteur électrique selon au moins une des revendications précédentes, **caractérisé en ce que** le moteur est un moteur synchrone.

13. Moteur électrique selon au moins une des revendications précédentes, **caractérisé en ce que** le capteur (1) est électriquement relié à des moyens pour déterminer la position du rotor.
